# EUROPEAN PATENT SPECIFICATION

(11) **EP 3 013 198 B1**
(45) Date of publication and mention of the grant of the patent: **13.11.2019**
(21) Application number: 14739919.0
(22) Date of filing: 27.06.2014
(51) Int. Cl.: A47J 43/044, B01F 7/16

(54) **STAND MIXERS**
STANDMIXER
BATTEURS SUR PIED

(30) Priority: 28.06.2013 GB 201311601
(43) Date of publication of application: 04.05.2016
(73) Proprietor: Kenwood Limited, Havant, Hampshire PO9 2NH (GB)
(72) Inventor: FIELDS, Robert, Havant Hampshire PO9 2NH (GB); PALMER, Paul, Havant Hampshire PO9 2NH (GB)
(74) Representative: Hector, Annabel Mary
(86) International application number: PCT/GB2014/051977
(87) International publication number: WO 2014/207485

(56) References cited:
- DE-A1- 3 323 529
- SE-B- 458 880
- US-A- 4 854 719
- US-A1- 2004 145 965

## Description

This invention relates to stand mixers, by which is meant the kind of motor-driven kitchen machine which is used to mix, or otherwise process, ingredients in a bowl by powered movement of one or more shanked tools which depend into the bowl from a head unit that carries a downwardly facing drive outlet, powered by the motor, to which the shank, or shanks, of the tool, or tools are fitted.

Such mixers conventionally comprise a generally C-shaped casing which provides a pedestal-like support for a mixing bowl and a generally upright support portion supporting the head unit so that it extends overhead of the bowl. Moreover, the powered movement of the shanked tool or tools is conventionally planetary in nature.

Stand mixers such as the Kenwood Chef kitchen machine are well known and have been well established in use for many years. Over the years, mixers of this kind have been adapted and developed so as to perform an ever broadening range of functions, and many such appliances provide, for example, a plurality of drive outlets running at different speeds and with differing torque characteristics, thus enabling them to perform a wide spread of operations.

Recently, stand mixer arrangements with a still broader operational capability have been developed to incorporate heating means, enabling ingredients in the bowl to be heated whilst being subjected to the planetary mixing action. The degree of heating is selectable, allowing the ingredients to be completely cooked, partially cooked, or merely warmed, according to user requirements and/or the procedures dictated by individual recipes.

Whilst conventional stand mixers have proved to be extremely valuable pieces of kitchen equipment, structural constraints and adherence to the use of planetary drive systems impose operational and functional limitations, because the structure and drive system conventionally used imposes a fixed movement regime on the driven tools. Indeed, the fixed reach imposed by the drive motion and the fixed dimensions of the tools used can also dictate the size and shape of bowls used to contain ingredients whilst they are operated on by the tools.

US 2004/145965 shows a stirring apparatus having a paddle depending from an arm extending from a carriage conveyed along a track. DE 3323529 shows a kitchen machine having a rotatable container and an implement mounted on an arm which swivels a tool in the container.

The invention aims to address such limitations and according to the invention there is provided a stand mixer as defined in claim 1.

In some preferred embodiments of the invention, the head is capable of independent movement along each of two co-planar orthogonal linear tracks; the plane of said tracks being substantially orthogonal to the axis about which the tool or tools rotate.

In other preferred embodiments of the invention, the head is capable of motion along a single linear track in a plane that is substantially orthogonal to the axis about which the tool or tools rotate.

In a particularly preferred embodiment of the invention, the stand mixer further comprises means for additionally moving said head along an axis substantially parallel to the axis about which the tool or tools rotate.

The electric motor of the stand mixer may be provided in said head unit or in said support means.

For compactness said electric motor is preferably housed in said head unit. Said electric motor may alternatively be housed in said support means.

For ease of use said means for causing or permitting the head unit to execute motion along first and second substantially co-planar tracks relative to said support means is preferably motor-driven. Said means for causing or permitting the head unit to execute motion along first and second substantially co-planar tracks relative to said support means may be powered by linear activators. Said means for causing or permitting the head unit to execute motion along first and second substantially co-planar tracks relative to said support means may be manipulated (directly or with mechanical assistance) by a user.

For ease of use the mixer is preferably further provided with a storage location configured to accommodate additional tools and adapted to present said tools in a juke-box like tool selector system, whereby tools can be readily exchanged during a mixing process. Said selector system may be mechanically operated. Said selector system may be electronically operated.

For user convenience the mixer preferably further comprises means for implementing tool exchanges automatically as predetermined by a programmed sequence of operations.

According to another aspect of the present invention there is provided a kit of parts comprising a stand mixer according to any preceding claim, at least one tool for suspending from the head unit, and optionally a mixing bowl.

In order that the invention may be clearly understood and readily carried into effect, some embodiments thereof will now be described, by way of example only, with reference to the accompanying drawings, of which:
Figure 1 shows, in perspective view, a stand mixer in accordance with a first embodiment;
Figure 2 shows a plan view of the mixer shown in Figure 1;
Figure 3(a) shows a front elevation of the mixer;
Figure 3(b) shows a side elevation of the mixer;
Figure 4 shows, in perspective view, a stand mixer in accordance with a second embodiment;
Figure 5 shows a plan view of the mixer of Figure 4;
Figure 6 shows a view similar to that of Figure 4, but with the head unit raised to enable the bowl to be placed into/removed from the mixer and/or to enable tools to be changed;
Figure 7 shows the mixer of Figures 4 to 6 in front elevation with the head unit in the raised position;
Figure 8 shows the mixer of Figures 4 to 6 in front elevation with the head unit in its lowered (mixing) position;
Figure 9 shows, in perspective view, a stand mixer in accordance with a third embodiment;
Figure 10 shows a view similar to that of Figure 9, but with the head unit raised to enable the bowl to be placed into/removed from the mixer and/or to enable tools to be changed; and
Figure 11 shows a plan view of the mixer of Figures 9 and 10.

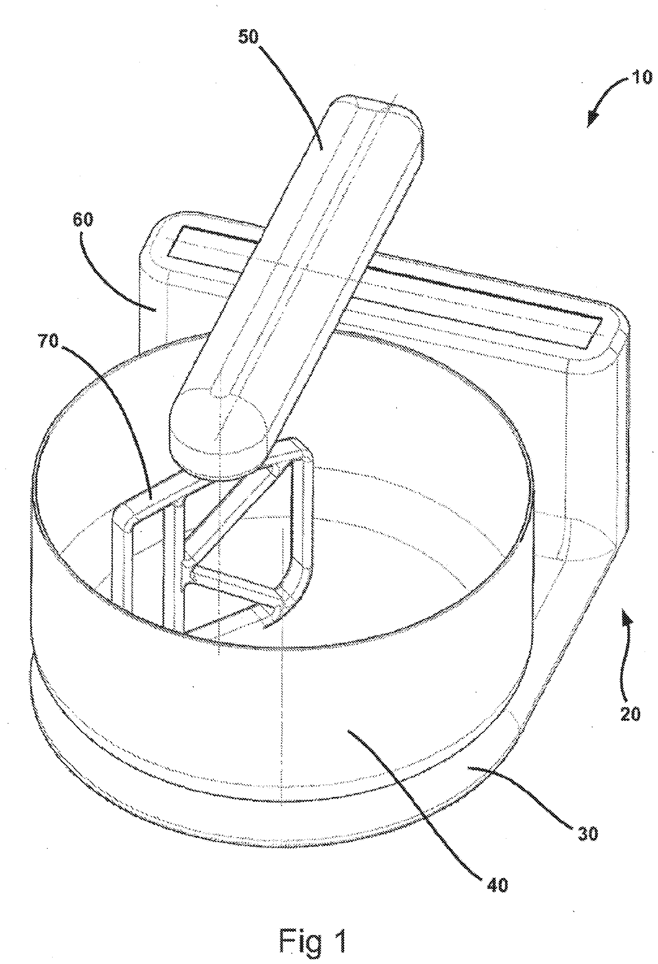

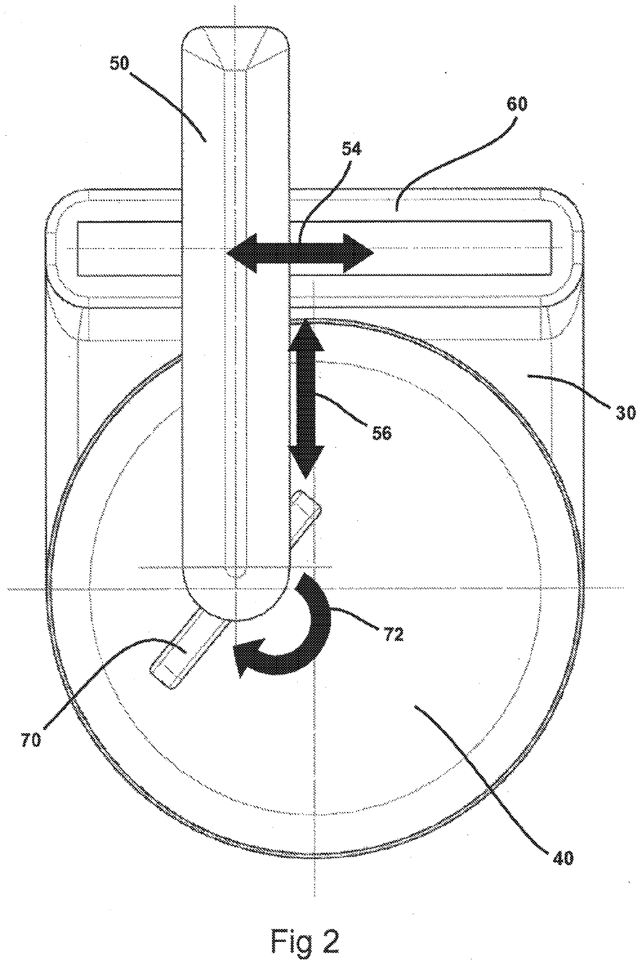

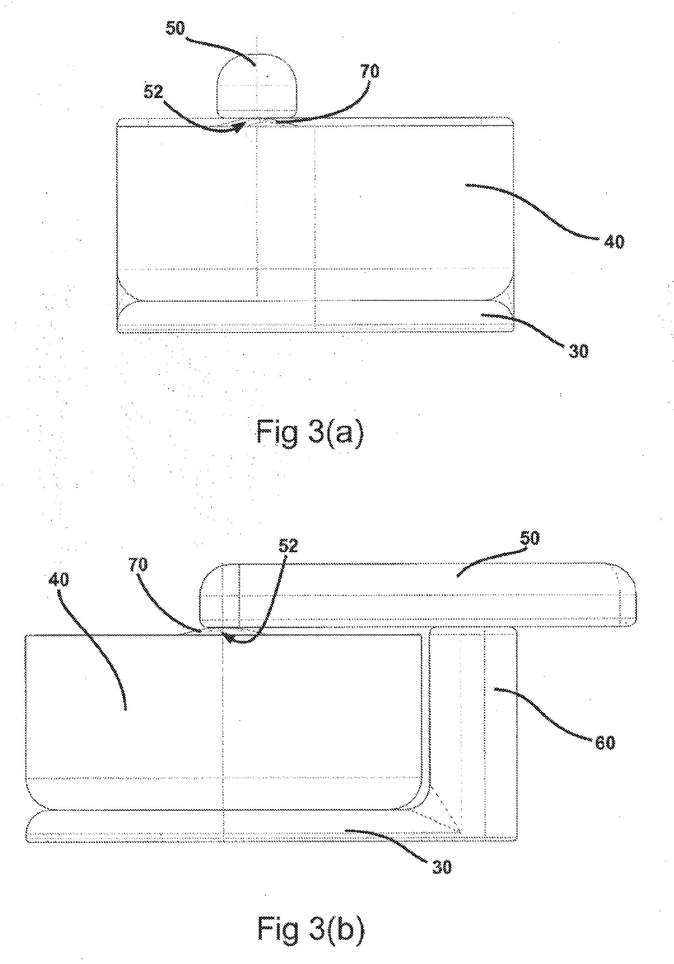

Referring now to Figures 1, 2, 3(a) and 3(b) of the drawings, a stand mixer 10 in accordance with a first embodiment comprises a base part 20, which includes a pedestal 30 for locating and supporting in an operational position a processing bowl 40 to contain ingredients for processing. The stand mixer 10 also includes a head part 50 which is supported and linked to the base part 20 by a generally upright portion 60. The stand mixer 10 further contains an electric drive motor (which is not shown, but is usually located either in the generally upright portion 60 or in the head part 50) and transmission means including gearing (not shown) which conveys the motive power supplied by the motor to a drive outlet 52, carried by the head part 50, to which one or more shanked tools such as 54 can be attached to perform various culinary tasks, such as mixing, kneading etc.. The outlet 52 of course faces downwards, towards the bowl 40.

In this particular example, the drive outlet 52 is configured to impart a simple rotary drive to one or more shanked tools such as 70 which are temporarily attached to the outlet and intended for food mixing and/or kneading. The drive outlet 52 is disposed in operation overhead of the pedestal 30, such that the tool or tools 70 driven therefrom depend downwardly from the outlet into the processing bowl 40. It will be appreciated that, in accordance with standard practice, the head part 50 may optionally be configured with further drive outlets providing drive speeds and characteristics suitable for a high-speed blender drive and/or a slow-speed mincer drive for example.

As outlined above, a shanked mixing tool 70, attached as is conventional, to the drive outlet 52, will depend in use into a processing bowl 40 placed on the pedestal 30, and the tool 70 is caused to rotate about an axis 72 extending along its shank. In accordance with this example, the tool 70 can be further moved around, within the bowl 40, by causing the head 50 to execute independent linear movements along a pair of orthogonal linear tracks defined by motion axes 54 and 56. By this means, the tool 70 can be made to reach substantially any area within the bowl 40 whilst being rotated about the axis 72.

In some embodiments, the bowl 40 is additionally caused to rotate.

The independent movements of the head 50 along axes 54 and 56 can be motorised or powered by linear activators, springs or manipulated (directly or with mechanical assistance) by the user whilst the tool 70 is in motion.

The head 50 and/or or part of the base 20 or upright portion 60 of the mixer 10 can be hinged to allow the bowl to be removed or to permit tool changes to be made. Alternatively, the arm unit can be raised vertically along a third linear track parallel to the tool axis 72.

By supporting the head part 50 by the upright portion 60 a compact arrangement of the mixer can be provided, while still enabling the tool 70 to be moved around within the bowl 40.

In an alternative the head 50 remains fixed relative to the motion axes 56 and merely the outlet 52 moves along within the head 50. By this arrangement the head does not project beyond the upright portion 60 in the course of movement of the tool along the motion axis 56. The tool 70 can with this arrangement be moved around within the bowl 40 as before.

In an alternative an upright portion carries the head as before, but the upright portion is not generally planar as shown in Figures 1 to 4 but instead forms a - preferably concavely - arcuate plane around the bowl. By this arrangement one of the tracks is not linear but arcuate, and one of the motion axes is not linear but curved. The tool can with this arrangement be moved around within the bowl as before.

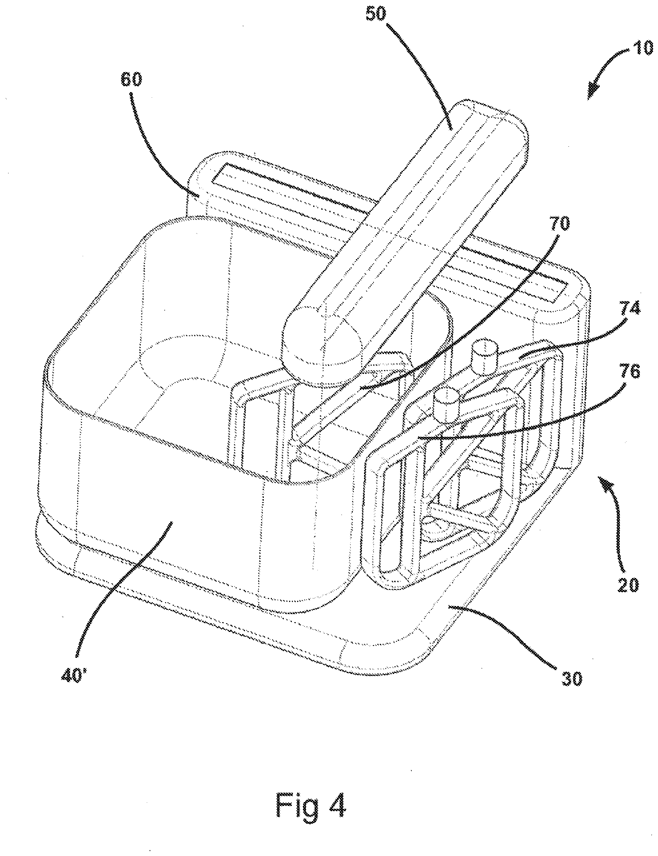

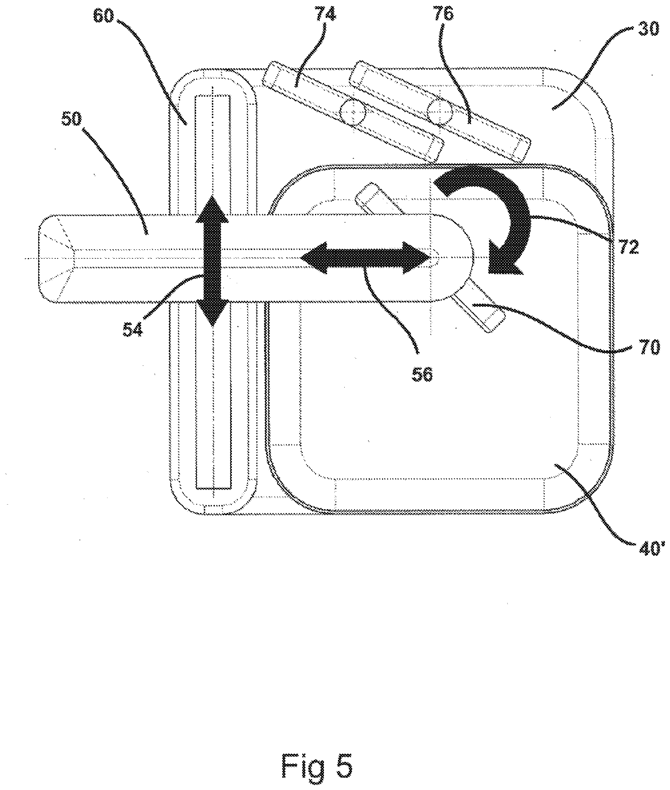

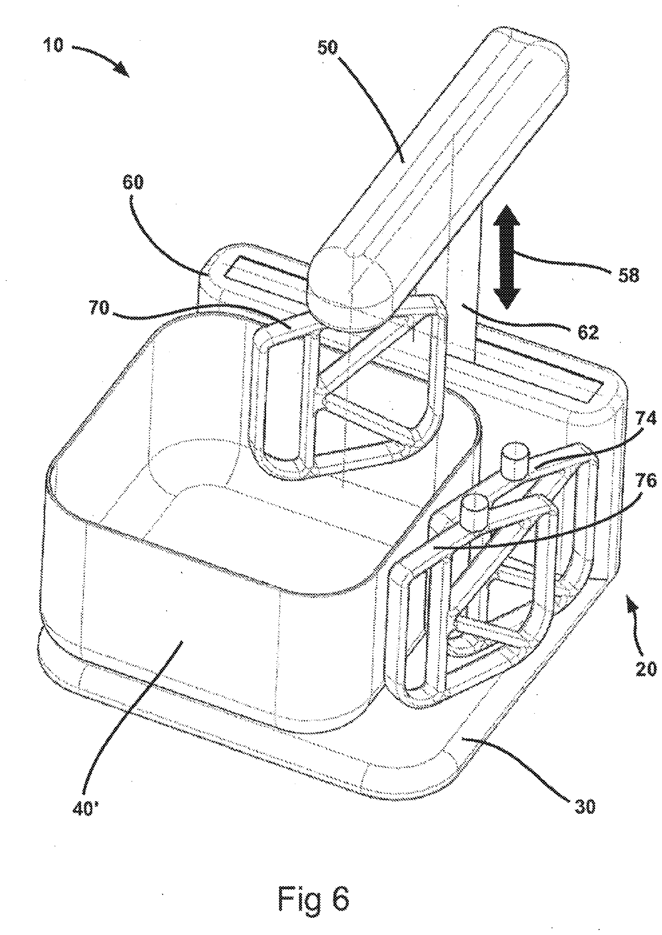

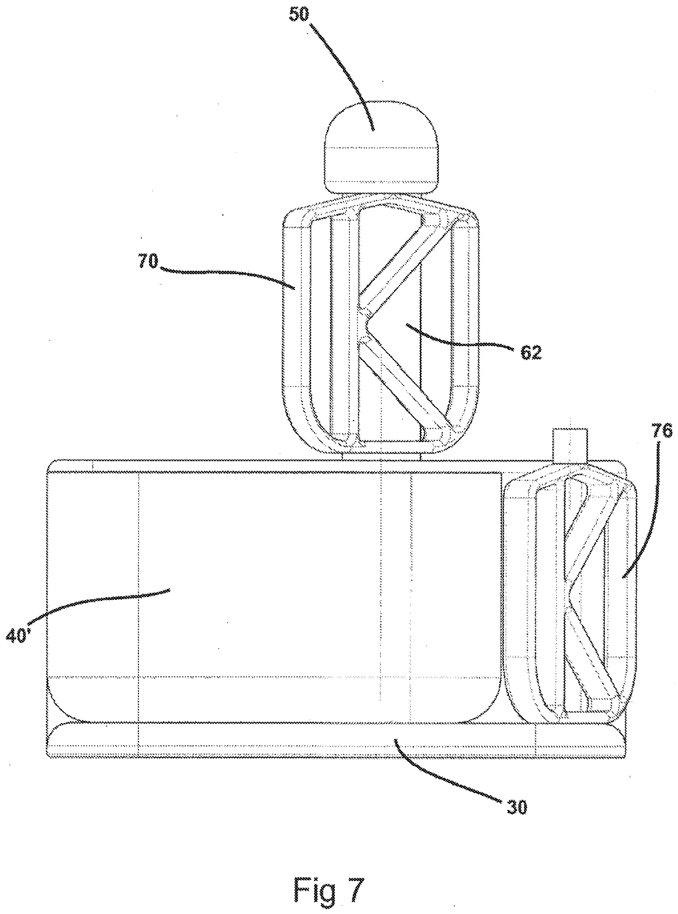

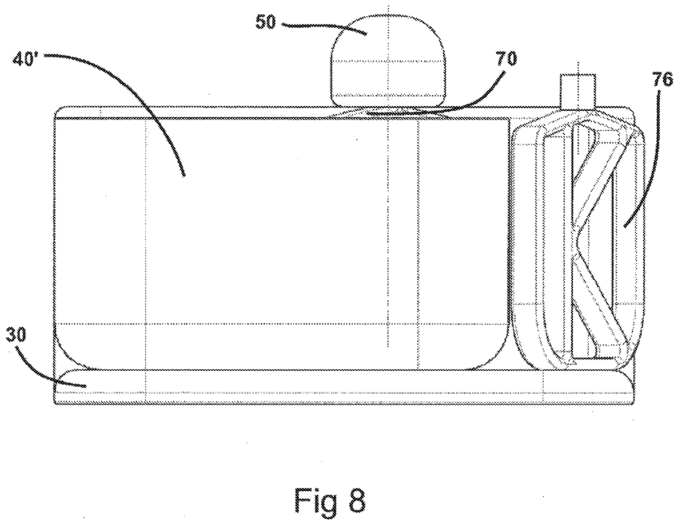

Figures 4 through 8 of the drawings show a stand mixer in accordance with a second embodiment which is generally similar to the stand mixer of the first embodiment, and accordingly components and structures common to the first embodiment are indicated by the same reference numbers.

In the second embodiment, whilst the head 50 and/or or part of the base 20 or upright portion 60 of the mixer 10 can be hinged to allow the bowl to be removed or to permit tool changes to be made, it is preferred that a slider device 62 is provided to enable the arm unit to be raised vertically along a third linear track 58 parallel to the tool axis 72. This motion can be motorised or powered by linear activators, springs or directly manipulated, with or without mechanical assistance, by the user.

The base part 20 is, in this embodiment, provided with a storage location capable of accommodating additional tools, such as 74 and 76. By positioning the drive outlet 52 of the head unit 50 over the additional tools, there is provided a juke-box like tool selector system, which facilitates the exchange of tools where, for example, differently configured tools are required to perform different kinds of mixing or processing operations. This selection/exchange of tools can be either mechanically or electronically operated, and may be implemented by user manipulation or automatically as predetermined by a programmed sequence of operations.

Moreover, and as shown in Figures 4 through 8, the bowl 40' does not need to conform to a round shape, as the moving arm head unit 50, and therefore the tool 70, can travel anywhere over or within the bowl.

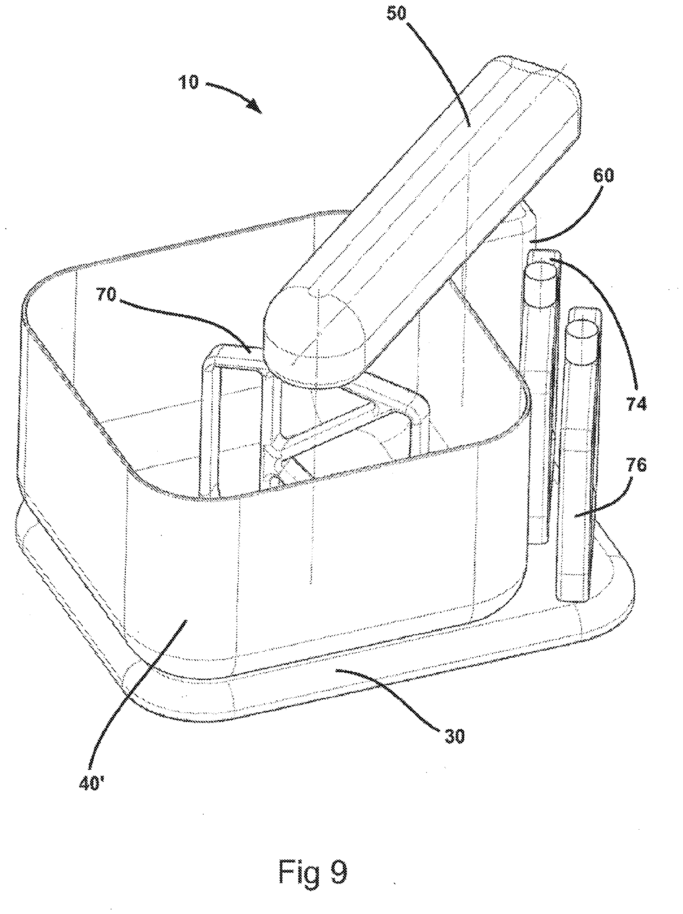

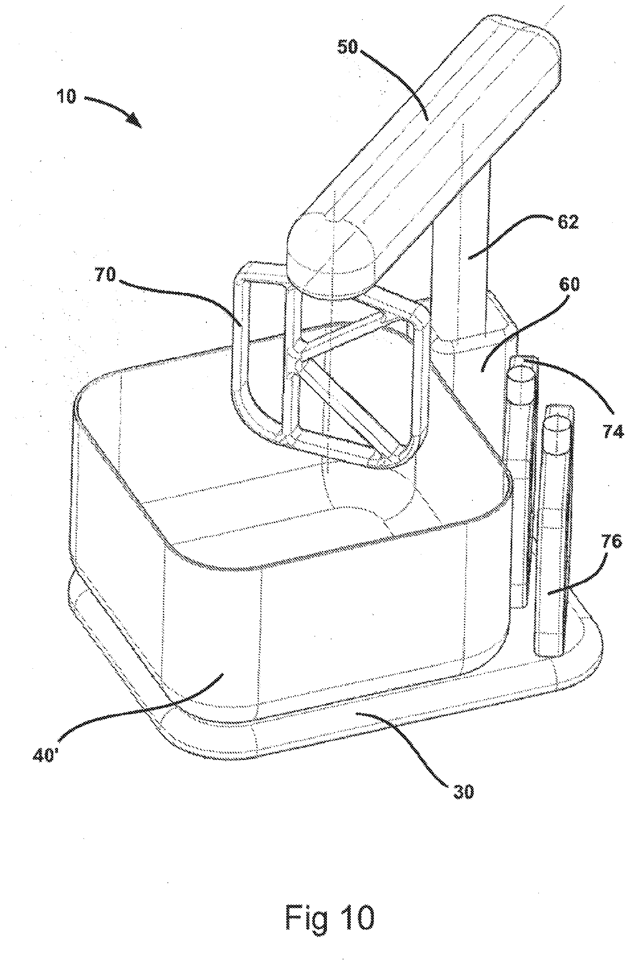

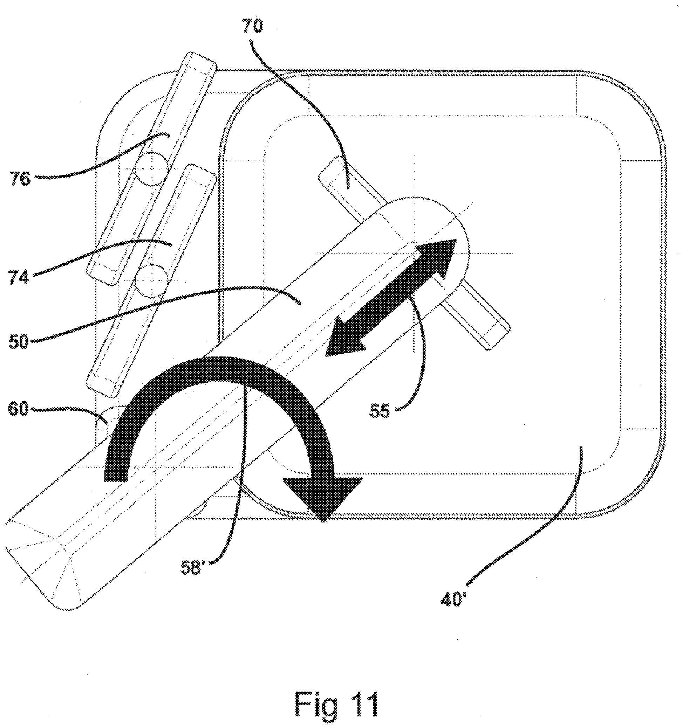

Figures 9 through 11 of the drawings show a stand mixer in accordance with a third embodiment which is generally similar to the stand mixer of the first and second embodiments, and accordingly components and structures common to the first and second embodiments are indicated by the same reference numbers.

In the third embodiment, the capability of the arm 50 to move individually along the two linear tracks 54 and 56 is replaced by a capability to move along a single track 55, which is inclined to, and thus has components of motion, along each of the axes 54 and 56. In this particular example, the track 55 is inclined at 45 degrees to each of the tracks 54 and 56, and this arrangement is preferred, though not essential.

The head unit 50 can also swing about an axis 58' parallel to the tool shank axis 72; the combination of this swinging motion and the linear motion along track 55 permitting the tool 70 to reach substantially any area within the bowl 40 whilst being rotated about the axis 72.

The head 50 and/or or part of the base 20 or upright portion 60 of the mixer 10 can be hinged to allow the bowl to be removed or to permit tool changes to be made. Alternatively, the arm unit can be raised vertically along the axis of track 58'.

The movement of the head unit 50 along track 55 and around axis 58' can be motorised or powered by linear activators, springs or manipulated (directly or with mechanical assistance) by the user whilst the tool 70 is in motion.

Whilst the head 50 and/or or part of the base 20 or upright portion 60 of the mixer 10 can be hinged to allow the bowl to be removed or to permit tool changes to be made, it is preferred that the arm unit is able to be raised vertically along a linear track extending along the axis 58'. As before, this motion can be motorised or powered by linear activators, springs or directly manipulated, with or without mechanical assistance, by the user.

The base part 20 is, as in the second embodiment, provided with a storage location capable of accommodating additional tools, such as 74 and 76. By positioning the drive outlet 52 of the head unit 50 over the additional tools, there is provided a juke-box like tool selector system, which facilitates the exchange of tools where, for example, differently configured tools are required to perform different kinds of mixing or processing operations. This selection/exchange of tools can be either mechanically or electronically operated, and may be implemented by user manipulation or automatically as predetermined by a programmed sequence of operations.

Moreover, and as shown in Figures 9 through 11, the bowl 40' does not need to conform to a round shape, as the moving arm head unit 50, and therefore the tool 70, can travel anywhere over or within the bowl.

A significant aspect of the stand mixer described above is to provide additional degrees of freedom and flexibility of motion of the tool relative to the bowl, thus allowing the mixing pattern to be altered so that the path followed by the tool can be modified to suit the medium being mixed. This additionally facilitates a capability to move the tool and associated drive outlet outside of the bowl to permit mid processing tool changes, such as changing from a whisk to a folding tool, for example. Such changes can be driven by the user but also by automatic programs for specific recipes.

Automatic tool changing can reduce the time to process recipes and also removes some human contact with the tools and therefore is cleaner and healthier in use.

## Claims

1. A stand mixer (10) comprising a head unit (50) capable of supporting at least one tool (70) suspended therefrom, a receiving location comprising a bowl-supporting pedestal (30) for a mixing bowl (40), support means (60) for supporting said head unit above the pedestal, the support means comprising an upright section linking the pedestal and the head unit, such that the said at least one tool depends into said bowl location, and means including an electric motor and associated transmission means for imparting rotary motion to said at least one tool, the mixer being **characterised by** means for causing or permitting the at least one tool suspended from the head unit and depending into the bowl location to execute motion in a plane that is substantially orthogonal to the axis about which the at least one tool rotates, the motion having at least two degrees of freedom in said plane, whereby the at least one tool can be bodily shifted, relative to the said bowl, whilst being rotated by the motor and transmission means.

2. A mixer according to claim 1, wherein said head unit is arranged to execute motion along a first and a second track (54, 56) relative to said support means, and preferably wherein said first and second tracks are substantially linear and/or mutually orthogonal, and more preferably wherein said first and second tracks are substantially co-planar.

3. A mixer according to claim 2, wherein said first and second tracks comprise, respectively, a linear track and a curved track (55, 58') preferably wherein said curved track intersects said linear track.

4. A mixer according to claim 1, wherein said head unit is arranged to execute motion along a first track and pivot around an axis substantially parallel to the rotary axis for the tool.

5. A mixer according to any of claims 2 to 4, wherein for motion along a first track the head unit is arranged to be bodily shifted relative to said support means, preferably by a slidable engagement means between the support means and the head unit.

6. A mixer according to claim 1, wherein a portion of the head unit for receiving at least one tool is arranged be bodily shifted relative to the head unit, preferably by a slidable engagement means (62) between the head unit and the portion of the head unit for receiving at least one tool.

7. A mixer according to any preceding claim, further comprising means for causing or permitting said head unit to execute motion (58) with a third degree of freedom, preferably in a direction substantially parallel to the axis about which the at least one tool rotates.

8. A mixer according to any preceding claim, wherein said electric motor is housed in said head unit, or wherein said electric motor is housed in said support means.

9. A mixer according to any preceding claim, wherein said means for causing or permitting the at least one tool suspended from the head unit to execute motion is motor-driven, or is powered by one or more linear activators,or is manipulated, directly or with mechanical assistance, by a user.

10. A mixer according to any preceding claim, further provided with a storage location configured to accommodate additional tools (74, 76) and adapted to present said tools for attachment to the head unit in a tool selector system, whereby a tool supported by the head unit can be readily exchanged with a tool from the storage location for sequential use of different tools during a mixing process.

11. A mixer according to claim 10, wherein said selector system is mechanically operated, or wherein said selector system is electronically operated.

12. A mixer according to claim 10 or 11, further comprising means for implementing tool exchanges automatically as predetermined by a programmed sequence of operations.

13. A kit of parts comprising a stand mixer according to any preceding claim, at least one tool for suspending from the head unit, and optionally a mixing bowl.

## Patentansprüche

1. Standmixer (10) mit einer Kopfeinheit (50), die mindestens ein daran aufgehängtes Werkzeug (70) tragen kann, wobei eine Empfangsposition Folgendes umfasst: einen Schüsselstützsockel (30) für eine Rührschüssel (40), ein Stützmittel (60) zum Stützen der genannten Kopfeinheit über dem Sockel, wobei das Stützmittel einen aufrechten Abschnitt umfasst, der den Sockel und die Kopfeinheit so verbindet, dass das genannte mindestens eine Werkzeug in die genannte Schüsselposition hineinragt, und ein Mittel, das einen Elektromotor und zugehörige Übertragungsmittel umfasst, um dem genannten mindestens einen Werkzeug eine Drehbewegung zu verleihen, wobei der Mixer **gekennzeichnet ist durch** Mittel zum Bewirken oder Zulassen, dass das mindestens eine Werkzeug von der Kopfeinheit abhängt und in die Schüsselposition hinein hängt, um eine Bewegung in einer Ebene auszuführen, die im Wesentlichen senkrecht zu der Achse ist, um die sich das mindestens eine Werkzeug dreht, wobei die Bewegung mindestens zwei Freiheitsgrade in der genannten Ebene aufweist, wobei das mindestens eine Werkzeug relativ zu der genannten Schüssel physisch verschoben werden kann, während es durch den Motor und die Übertragungseinrichtung gedreht wird.

2. Mixer nach Anspruch 1, wobei die genannte Kopfeinheit dafür angeordnet ist, eine Bewegung entlang einer ersten und einer zweiten Spur (54, 56) relativ zu dem genannten Stützmittel auszuführen, und vorzugsweise wobei die genannten ersten und zweiten Spuren im wesentlichen linear und/oder zueinander orthogonal sind, und wobei die genannten ersten und zweiten Spuren besonders bevorzugt im Wesentlichen koplanar sind.

3. Mixer nach Anspruch 2, wobei die genannten ersten und zweiten Spuren jeweils eine lineare Spur und eine gekrümmte Spur (55, 58') umfassen, wobei die genannten gekrümmten Spuren vorzugsweise die genannten linearen Spuren schneiden.

4. Mixer nach Anspruch 1, wobei die genannte Kopfeinheit dafür angeordnet ist, eine Bewegung entlang einer ersten Spur auszuführen und um eine Achse zu schwenken, die im Wesentlichen parallel zur Drehachse des Werkzeugs ist.

5. Mixer nach einem der Ansprüche 2 bis 4, wobei die Kopfeinheit zur Bewegung entlang einer ersten Spur dafür angeordnet ist, relativ zu den genannten Stützmitteln vorzugsweise durch ein verschiebbares Eingriffsmittel zwischen dem Stützmittel und der Kopfeinheit physisch verschoben zu werden.

6. Mixer nach Anspruch 1, **dadurch gekennzeichnet, dass** ein Teil der Kopfeinheit zur Aufnahme mindestens eines Werkzeugs gegenüber der Kopfeinheit vorzugsweise durch ein verschiebbares Eingriffsmittel (62) zwischen der Kopfeinheit und dem Abschnitt der Kopfeinheit zur Aufnahme mindestens eines Werkzeugs physisch verschiebbar angeordnet ist.

7. Mixer nach einem der vorhergehenden Ansprüche, der ferner eine Einrichtung zum Bewirken oder Zulassen umfasst, dass die genannte Kopfeinheit eine Bewegung (58) mit einem dritten Freiheitsgrad vorzugsweise in einer Richtung ausführt, die im Wesentlichen parallel zu der Achse ist, um die sich das mindestens eine Werkzeug dreht.

8. Mixer nach einem der vorhergehenden Ansprüche, wobei der genannte Elektromotor in der genannten Kopfeinheit untergebracht ist, oder wobei der genannte Elektromotor in der genannten Stützeinrichtung untergebracht ist.

9. Mixer nach einem der vorhergehenden Ansprüche, wobei das genannte Mittel zum Bewirken oder Zulassen, dass das mindestens eine Werkzeug, das an der Kopfeinheit aufgehängt ist, eine Bewegung ausführt, motorgetrieben ist oder von einem oder mehreren linearen Aktivatoren angetrieben wird oder direkt oder mit mechanischer Unterstützung von einem Benutzer manipuliert wird.

10. Mixer nach einem der vorhergehenden Ansprüche, der ferner mit einer Lagerposition versehen ist, die zur Aufnahme zusätzlicher Werkzeuge (74, 76) konfiguriert ist und dafür ausgelegt ist, die genannten Werkzeuge zur Befestigung an der Kopfeinheit in einem Werkzeugauswahlsystem bereitzustellen, wobei ein Werkzeug, das von der Kopfeinheit getragen wird, leicht mit einem Werkzeug von der Lagerposition ausgetauscht werden kann, um während eines Mischvorgangs nacheinander verschiedene Werkzeuge zu verwenden.

11. Mixer nach Anspruch 10, wobei das genannte Auswahlsystem mechanisch betrieben wird oder wobei das genannte Auswahlsystem elektronisch betrieben wird.

12. Mixer nach Anspruch 10 oder 11, der ferner ein Mittel zum automatischen Durchführen von Werkzeugwechseln, wie durch eine programmierte Abfolge von Operationen vorgegeben, umfasst.

13. Kit, der einen Standmixer nach einem der vorhergehenden Ansprüche, mindestens ein Werkzeug zum Aufhängen an der Kopfeinheit und gegebenenfalls eine Mischschüssel umfasst.

## Revendications

1. Batteur sur pied (10) comportant une unité formant tête (50) en mesure de supporter au moins un accessoire (70) suspendu au niveau de celle-ci, un emplacement de réception comportant un socle de support de cuve(30) pour une cuve à mélanger (40), un moyen de support (60) servant à supporter ladite unité formant tête au-dessus du socle, le moyen de support comportant une section verticale reliant le socle et l'unité formant tête, de telle sorte que ledit au moins un accessoire s'étend jusque dans ledit emplacement de cuve, et des moyens comprenant un moteur électrique et des moyens de transmission associés servant à communiquer un mouvement de rotation audit au moins un accessoire, le batteur étant **caractérisé par** un moyen servant à causer ou à permettre l'exécution, par ledit au moins un accessoire suspendu au niveau de l'unité formant tête et s'étendant, de manière dépendante, jusque dans l'emplacement de cuve, d'un mouvement dans un plan qui est sensiblement orthogonal par rapport à l'axe autour duquel ledit au moins un accessoire tourne, le mouvement ayant au moins deux degrés de liberté dans ledit plan, ce par quoi ledit au moins un accessoire peut être physiquement décalé, par rapport à ladite cuve, tout en étant mis en rotation par le moteur et les moyens de transmission.

2. Batteur selon la revendication 1, dans lequel ladite unité formant tête est agencée pour exécuter un mouvement le long d'une première et d'une deuxième voies (54, 56) par rapport audit moyen de support, et de préférence dans lequel lesdites première et deuxième voies sont sensiblement linéaires et/ou mutuellement orthogonales, et encore plus de préférence dans lequel lesdites première et deuxième voies sont sensiblement coplanaires.

3. Batteur selon la revendication 2, dans lequel lesdites première et deuxième voies comportent, respectivement, une voie linéaire et une voie courbe (55, 58') de préférence dans lequel ladite voie courbe croise ladite voie linéaire.

4. Batteur selon la revendication 1, dans lequel ladite unité formant tête est agencée pour exécuter un mouvement le long d'une première voie et pour pivoter autour d'un axe sensiblement parallèle par rapport à l'axe de rotation de l'accessoire.

5. Batteur selon l'une quelconque des revendications 2 à 4, dans lequel, pour un mouvement le long d'une première voie, l'unité formant tête est agencée pour être physiquement décalée par rapport audit moyen de support, de préférence par un moyen de mise en prise coulissant entre le moyen de support et l'unité formant tête.

6. Batteur selon la revendication 1, dans lequel une partie de l'unité formant tête servant à recevoir au moins un accessoire est agencée pour être physiquement décalée par rapport à l'unité formant tête, de préférence par un moyen de mise en prise coulissant (62) entre l'unité formant tête et la partie de l'unité formant tête servant à recevoir au moins un accessoire.

7. Batteur selon l'une quelconque des revendications précédentes, comportant par ailleurs un moyen servant à causer ou à permettre l'exécution, par ladite unité formant tête, d'un mouvement (58) ayant un troisième degré de liberté, de préférence dans un direction sensiblement parallèle par rapport à l'axe autour duquel ledit au moins un accessoire tourne.

8. Batteur selon l'une quelconque des revendications précédentes, dans lequel ledit moteur électrique est logé dans ladite unité formant tête, ou dans lequel ledit moteur électrique est logé dans ledit moyen de support.

9. Batteur selon l'une quelconque des revendications précédentes, dans lequel ledit moyen servant à causer ou à permettre l'exécution, par ledit au moins un accessoire suspendu au niveau de l'unité formant tête, d'un mouvement est entraîné par moteur, ou est motorisé par un ou plusieurs actionneurs linéaires, ou est manipulé, directement ou au moyen d'une assistance mécanique, par un utilisateur.

10. Batteur selon l'une quelconque des revendications précédentes, comportant par ailleurs un emplacement de rangement configuré à des fins de réception d'accessoires supplémentaires (74, 76) et adapté pour présenter lesdits accessoires à des fins de fixation au niveau de l'unité formant tête dans un système de sélection d'accessoires, ce par quoi un accessoire supporté par l'unité formant tête peut être facilement échangé avec un accessoire en provenance de l'emplacement de rangement à des fins d'utilisation séquentielle de différents accessoires au cours d'un processus de mélange.

11. Batteur selon la revendication 10, dans lequel ledit système de sélection est actionné de manière mécanique, ou dans lequel ledit système de sélection est actionné de manière électronique.

12. Batteur selon la revendication 10 ou la revendication 11, comportant par ailleurs un moyen servant à des fins de mise en œuvre d'échanges d'accessoires de manière automatique tel qu'il aura été prédéterminé par une séquence programmée d'opérations.

13. Jeu de pièces comportant un batteur sur pied selon l'une quelconque des revendications précédentes, au moins un accessoire destiné à être suspendu au niveau de l'unité formant tête, et éventuellement une cuve à mélanger.
